# EUROPEAN PATENT APPLICATION

(11) **EP 4 826 581 A1**
(43) Date of publication of application: **21.10.2026**
(21) Application number: 26163243.4
(22) Date of filing: 09.03.2026
(51) Int. Cl.: G06F 21/55, G06F 16/35, G06F 21/62

(54) **INFORMATION PROCESSING APPARATUS, INFORMATION PROCESSING METHOD, AND INFORMATION PROCESSING PROGRAM**

(30) Priority: 18.04.2025 JP 2025068795
(71) Applicant: FUJITSU LIMITED, Kawasaki-shi, Kanagawa 211-8588 (JP)
(72) Inventor: NISHIMAKI, Satoru, Kawasaki-shi, Kanagawa, 211-8588 (JP)
(74) Representative: Hoffmann Eitle

(57) **Abstract**

The information processing apparatus includes a decomposition unit configured to decompose a content existing on a network into first unit information based on a format, a similarity classification processing unit configured to calculate a similarity between false information and second unit information included in determined target false information for each piece of the first unit information, and a first label assigning unit configured to assign, to each piece of the first unit information, a first label assigned to the second unit information in which the similarity is equal to or greater than a first threshold value.

## Description

### FIELD

The embodiments discussed herein are related to an information processing apparatus, an information processing method, and an information processing program.

### BACKGROUND

In recent years, false information such as fake news, a false rumor, and a non-existing fake image has become a serious problem that poses a threat to social trust. With the development of technologies such as artificial intelligence (AI), the false information being spread has also become sophisticated, and it is difficult to guarantee social safety only by appealing to media literacy of people. Therefore, the importance of countermeasures against false information to counter threats to society is increasing. In the false information countermeasure, it is effective to perform intervention from the false information countermeasure system such as warning notifying the user that the possibility of the false information is high or providing information as supplementary description.

As a mechanism for performing appropriate intervention and scaling at the timing when the user comes in contact with false information, labeling that gives information called a label to a website that performs intervention in advance is effective. For example, labeling is performed on posting of an article on a website, a social networking service (SNS), or the like, based on the authenticity determination performed in advance. Thereafter, at the time of information browsing by the client software, the false information countermeasure system performs intervention according to the processing content based on the label. The label can embed various types of information depending on contents to be intervened or warned, and the type varies depending on the information to be embedded.

The actual information includes similar false information similar to the original false information by duplication or clipping from the original false information, and it is preferable to intervene not only the original false information but also the similar false information to take a false information countermeasure.

For example, as the false information countermeasure, a technology of generating reliability evaluation information in which a false possibility is quantified based on at least one of an extracted word/phrase extracted from a cited source text or an attribute of the cited source text and notifying the reliability evaluation information has been proposed.

Patent Literature 1: Japanese Laid-open Patent Publication No. 2013-77155

However, it is difficult to perform labeling on many pieces of problematic information. In a simple method of performing true/false determination and labeling every time, true/false determination and generation of description information occur for all dangerous information. In such a method, posting and spreading of false information by copying or clipping is overwhelmingly disadvantageous in terms of cost, and labeling is not in time. Therefore, for the similar false information, it is expected to improve scalability of the false information countermeasure by reusing the description information generated from the original false information.

In order to reuse the description information generated from the original false information, it is important to specify the similar false information. However, in the determination with a simple similarity, it is possible to extract similar information as the entire information, but it is difficult to specify the similar portion. In addition, in the case of clipping or the like, there is also a situation in which the false information for which the true/false determination has been made is posted with the existing basis information deleted. Labeling information that is not subject to an intervention increases the cognitive load of the viewer and weakens the effect of the intervention. Therefore, it is important to realize false information labeling with a small cognitive load, but it is difficult to specify a place to be labeled by simple determination with a similarity, and it is difficult to give an appropriate label. Therefore, it is difficult to provide an effective countermeasure against false information.

In addition, the technology for generating reliability evaluation information based on an extracted word/phrase or attribute from the citation source text does not extract similar false information, and it is difficult to provide an effective false information countermeasure.

Accordingly, it is an object in one aspect of an embodiment of the invention to provide an information processing apparatus, an information processing method, and an information processing program that provide effective false information countermeasure.

### SUMMARY

According to an aspect of an embodiment, an information processing apparatus includes a decomposition unit configured to decompose a content existing on a network into first unit information based on a format, a similarity classification processing unit configured to calculate a similarity between false information and second unit information included in determined target false information for each piece of the first unit information, and a first label assigning unit configured to assign, to each piece of the first unit information, a first label assigned to the second unit information in which the similarity is equal to or greater than a first threshold value.

### BRIEF DESCRIPTION OF DRAWINGS

FIG. 1 is a block diagram of a false information countermeasure system;
FIG. 2 is a hardware configuration diagram of a labeling apparatus;
FIG. 3 is a diagram illustrating an example of target false information data;
FIG. 4 is a diagram illustrating modality data in an initial state;
FIG. 5 is a diagram illustrating false information label data in an initial state;
FIG. 6 is a diagram illustrating description label data in an initial state;
FIG. 7 is a diagram illustrating labeling data in an initial state;
FIG. 8 is a diagram illustrating determination target information #1;
FIG. 9 is a diagram illustrating determination target information #2;
FIG. 10 is a diagram illustrating determination target information #3;
FIG. 11 is a diagram illustrating determination target information #4;
FIG. 12 is a diagram illustrating an example of modality data after modality decomposition;
FIG. 13 is a diagram illustrating an example of labeling data after false information label assignment;
FIG. 14 is a diagram illustrating an example of labeling data after description label assignment;
FIG. 15 is a diagram illustrating an outline of labeling processing according to a first embodiment;
FIG. 16 is a diagram illustrating an example of a false information display screen;
FIG. 17 is a flowchart of the labeling processing according to the first embodiment;
FIG. 18 is a diagram illustrating an example of labeling data after false information label assignment according to a second embodiment;
FIG. 19 is a diagram illustrating an example of labeling data after description label assignment according to the second embodiment;
FIG. 20 is a diagram illustrating determination target information #5;
FIG. 21 is a diagram illustrating determination target information #6;
FIG. 22 is a diagram illustrating an example of modality data after modality decomposition according to a third embodiment;
FIG. 23 is a diagram illustrating an example of labeling data after false information label assignment according to the third embodiment; and
FIG. 24 is a diagram illustrating an example of labeling data after description label assignment according to the third embodiment.

### DESCRIPTION OF EMBODIMENTS

Preferred embodiments of the present invention will be explained with reference to accompanying drawings. Note that the information processing apparatus, the information processing method, and the information processing program described in the present application are not limited by the following embodiments.

### (a) First Embodiment

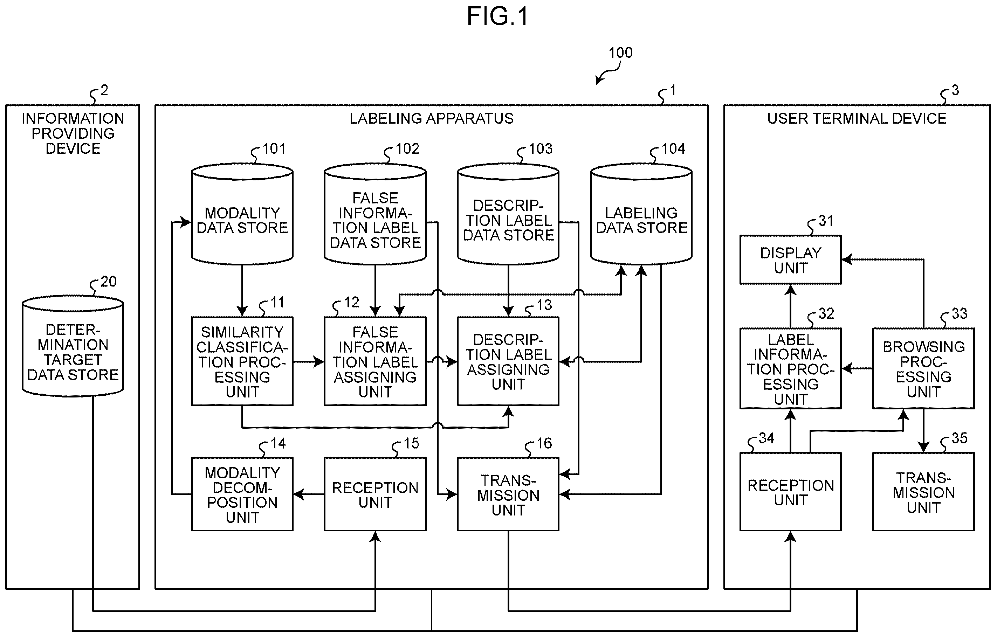

FIG. 1 is a block diagram of a false information countermeasure system. A false information countermeasure system 100 according to the present embodiment includes a labeling apparatus 1, an information providing device 2, and a user terminal device 3.

The information providing device 2 stores determination target information that is content on a network and is a determination target as to whether information determined to be false information is included according to a result of true/false determination in advance. The determination target information is, for example, posting of a website or an SNS.

The labeling apparatus 1 determines whether the determination target information provided from the information providing device 2 includes information determined to be false information according to a result of true/false determination in advance. Then, the labeling apparatus 1 adds a label related to the false information to the determination target information according to the determination result. The labeling apparatus 1 corresponds to an example of an "information processing apparatus".

When the user browses the determination target information, the user terminal device 3 provides information related to the false information using the label assigned by the labeling apparatus 1. Details of the labeling apparatus 1 and the user terminal device 3 are described below.

As illustrated in FIG. 1, the labeling apparatus 1 includes a similarity classification processing unit 11, a false information label assigning unit 12, a description label assigning unit 13, a modality decomposition unit 14, a reception unit 15, and a transmission unit 16. In addition, the labeling apparatus 1 includes a modality data store 101, a false information label data store 102, a description label data store 103, and a labeling data store 104.

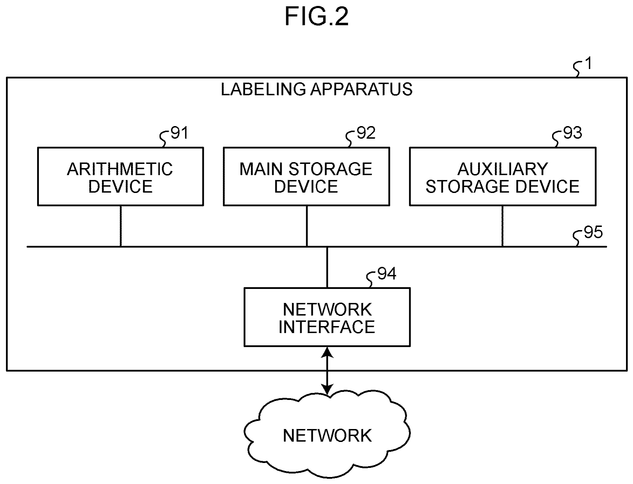

FIG. 2 is a hardware configuration diagram of the labeling apparatus. The labeling apparatus 1 includes, as hardware configurations, an arithmetic device 91, a main storage device 92, an auxiliary storage device 93, a network interface 94, and a data bus 95. The arithmetic device 91 is connected to the main storage device 92, the auxiliary storage device 93, and the network interface 94 via a data bus 95.

The network interface 94 is a communication interface between the labeling apparatus 1 and an external network. For example, the arithmetic device 91 communicates with the information providing device 2 and the user terminal device 3 connected to an external network via the network interface 94. The network interface 94 implements the functions of the reception unit 15 and the transmission unit 16 illustrated in FIG. 1.

The auxiliary storage device 93 is, for example, a hard disk or a solid state drive (SSD). The auxiliary storage device 93 implements the functions of the modality data store 101, the false information label data store 102, the description label data store 103, and the labeling data store 104 illustrated in FIG. 1. In addition, the auxiliary storage device 93 stores various programs including programs for implementing the functions of the similarity classification processing unit 11, the false information label assigning unit 12, the description label assigning unit 13, and the modality decomposition unit 14.

For example, a dynamic random access memory (DRAM) can be used as the main storage device 92.

The arithmetic device 91 may include a plurality of processors and may also include a graphics processing unit (GPU). The arithmetic device 91 reads various programs from the auxiliary storage device 93, loads the programs onto the main storage device 92, and executes the programs. As a result, the arithmetic device 91 implements the functions of the similarity classification processing unit 11, the false information label assigning unit 12, the description label assigning unit 13, and the modality decomposition unit 14 illustrated in FIG. 1. The similarity classification processing unit 11, the false information label assigning unit 12, the description label assigning unit 13, and the modality decomposition unit 14 may be implemented by a central processing unit (CPU) or may be implemented by cooperation of the CPU and the GPU.

Referring back to FIG. 1, the description is continued. In an initial state, the labeling apparatus 1 stores information regarding false information specified by true/false determination in advance. Hereinafter, the false information specified by the true/false determination in advance, which is the basis of the determination as to whether the related false information is included in the determination target information, is referred to as "target false information", and the data of the target false information is referred to as "target false information data". Here, the labeling apparatus 1 can store information regarding a plurality of pieces of target false information, but label assignment regarding one piece of target false information is described below as an example.

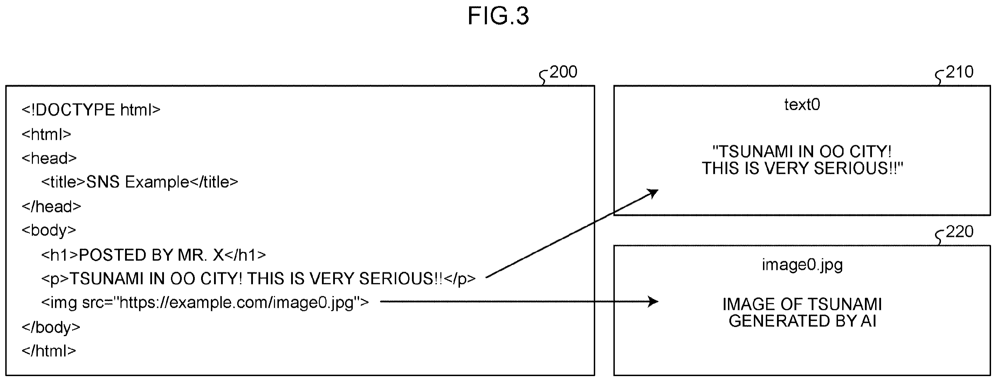

FIG. 3 is a diagram illustrating an example of target false information data. Target false information data 200 is data indicating the target false information described in html. For example, the labeling apparatus 1 stores information regarding the target false information data 200 in an initial state. As illustrated in FIG. 3, the target false information data 200 includes a text 210 as character information and an image 220 as image information. The image 220 is an AI-generated image of a tsunami that did not actually occur. The text 210 is false information created to match the image 220.

The target false information data 200 is divided into modalities that are predetermined unit information. For example, the modality is generated by decomposing the modality into a tag or a key assigned to the data or a component such as a claim indicating an element for each description content. In addition, the modality may be generated by separating the target false information data 200 for each data type such as a text, an image, a moving image, account information, or metadata or may be generated by decomposing the target false information data for each description content of the text or each specific scene of the moving image.

A tag, a key, a claim, a data type, a description content, a scene of a moving image, and the like correspond to an example of a "format" serving as a reference for decomposing the modality. That is, the modality is generated by decomposing data into various formats. The modality of the target false information corresponds to an example of the "second unit information".

For example, if the target false information is data in the format of html, the target false information is decomposed into modalities by extracting data for each tag. Furthermore, even if the target false information is data in an XML format or a JSON format, the target false information is decomposed into modalities by being extracted for each tag or key.

For example, the target false information data 200 is classified by a tag, so that the text 210 and the image 220 illustrated in FIG. 3 are generated as modalities.

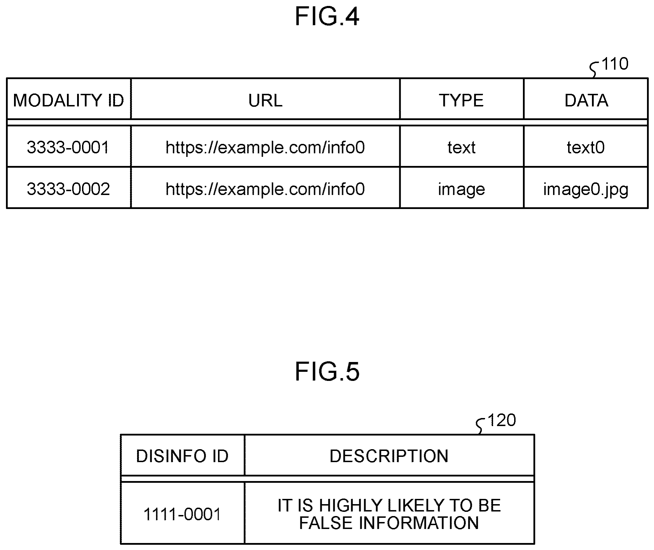

The modality data store 101 stores modality data that is information regarding modalities of target false information data and determination target information data that is data of determination target information. FIG. 4 is a diagram illustrating modality data in an initial state. For example, the modality data store 101 stores modality data 110 in an initial state. The modality data 110 stores a modality ID which is identification information of the text 210 and the image 220 which are modalities of the target false information data 200, and a storage location, a data type, and a data name for each piece of data. Here, the modality ID of the text 210 is 3333-0001, and the modality ID of the image 220 is 3333-0002. By including the data type in the modality data 110, the labeling apparatus 1 can efficiently compare the similarity.

In addition, the labeling apparatus 1 assigns the following two types of labels. One is a false information label and is a label assigned to information that is highly likely to be false information and is a warning target in true/false determination. By using the false information label, the labeling apparatus 1 can provide a user with a result of the true/false determination and give a warning. The other is a description label and is a label that gives a description serving as a basis of true/false determination. By using the description label, the labeling apparatus 1 can provide the user with description of the basis for supplementing the result of the true/false determination. The data of the false information label is referred to as false information label data, and the data of the description label is referred to as description label data. In addition, the false information label and the description label may be collectively referred to simply as a "label".

The false information label data store 102 stores information regarding a false information label assigned to the target false information. FIG. 5 is a diagram illustrating the false information label data in an initial state. For example, the false information label data store 102 stores false information label data 120 including information regarding a false information label for the target false information data 200 in an initial state. The false information label data 120 includes a false information identifier (ID) which is identification information of the target false information data 200 and description information indicating a content of a false information label assigned to the target false information. Here, the false information ID of the target false information data 200 is 1111-0001.

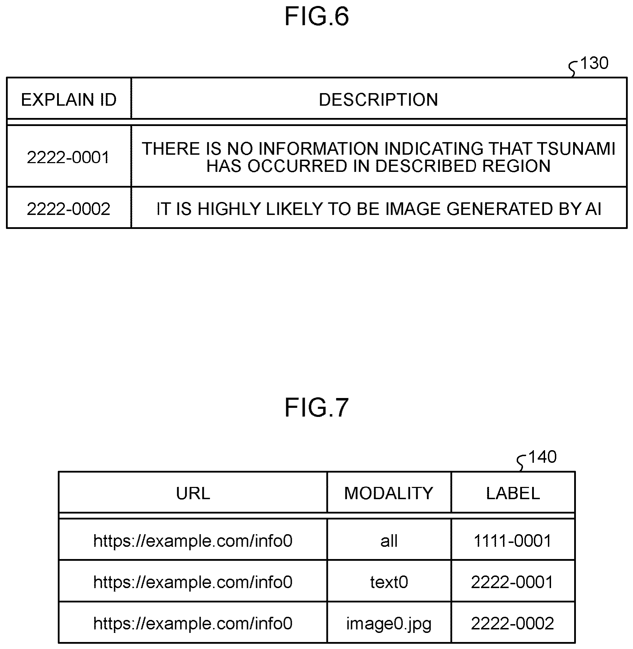

The description label data store 103 stores information regarding a description label for each modality included in the target false information. FIG. 6 is a diagram illustrating the description label data in an initial state. For example, the description label data store 103 stores description label data 130 for each modality of the target false information data 200 in the initial state. The description label data 130 stores a description ID which is identification information of the description label assigned to each modality and description information indicating contents of the description label. Here, the description ID of the description label assigned to the text 210 is 2222-0001, and the description ID of the description label assigned to the image 220 is 2222-0002. Then, the description information regarding the text 210 is "there is no information indicating that tsunami has occurred in the described region", and the description information regarding the image 220 is "it is highly likely to be an image generated by AI".

The labeling data store 104 stores target false information and similar false information, and information of labels to be assigned to these modalities. FIG. 7 is a diagram illustrating the labeling data in an initial state. For example, the labeling data store 104 stores labeling data 140 of the target false information data 200 in the initial state. The labeling data 140 includes information indicated by a combination of a storage location and a name for specifying a target of label assignment and identification information of a label to be assigned to the information. As the identification information of the label, a label ID registered in the false information label data 120 and the description label data 130 is used.

Here, since the false information label is assigned to the entire information stored in the designated storage location, a value of "all" representing the entire information is set in the name. When a false information label is assigned to a portion of the information stored in the designated storage location, a value representing the designated portion may be set as the name. Furthermore, in the present embodiment, a URL indicating a storage location is used as the information for specifying the target false information and the similar false information, but the specifying method is not limited thereto, and the target false information and the similar false information may be specified using a post ID of an SNS, an ID separately issued to the information, or the like. Furthermore, the target false information and the similar false information may be specified using frame information or the like that designates a region in which specific information in the URL is displayed.

Note that, with respect to the true/false determination, the generation of the modality, and the assignment of the label to the target false information, allocation may be performed by an analysis target of an existing true/false determination method, may be performed using a machine learning model, or may be manually performed.

Referring back to FIG. 1, the description is continued. The reception unit 15 receives data of determination target information from a determination target data store 20 included in the information providing device 2. For example, the reception unit 15 receives data of determination target information #1 to #4.

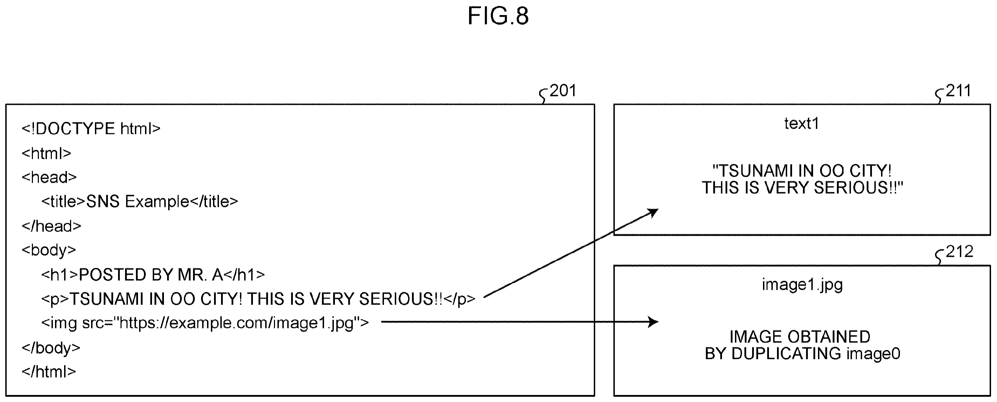

FIG. 8 is a diagram illustrating the determination target information #1. Determination target data 201 is data indicating the determination target information #1 described in html. The determination target data 201 includes a text 211 and an image 212. The text 211 is information that cites the text 210 of the target false information data 200 as it is. The image 212 is an image obtained by duplicating the image 220 of the target false information data 200. The determination target information #1 is information of duplication of the target false information.

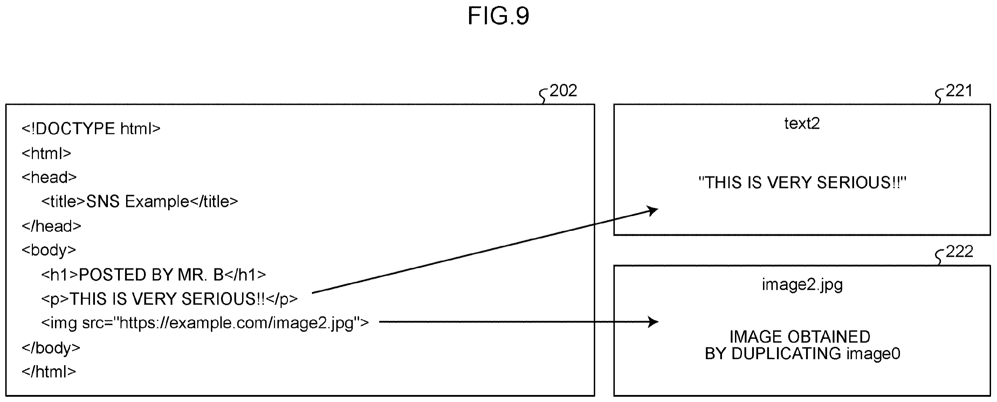

FIG. 9 is a diagram illustrating the determination target information #2. Determination target data 202 is data indicating the determination target information #2 described in html. The determination target data 202 includes a text 221 and an image 222. The text 221 is information that cites a portion of the text 210 of the target false information data 200. The image 222 is an image obtained by duplicating the image 220 of the target false information data 200. The determination target information #2 is clip information of the target false information that cites the most of the target false information.

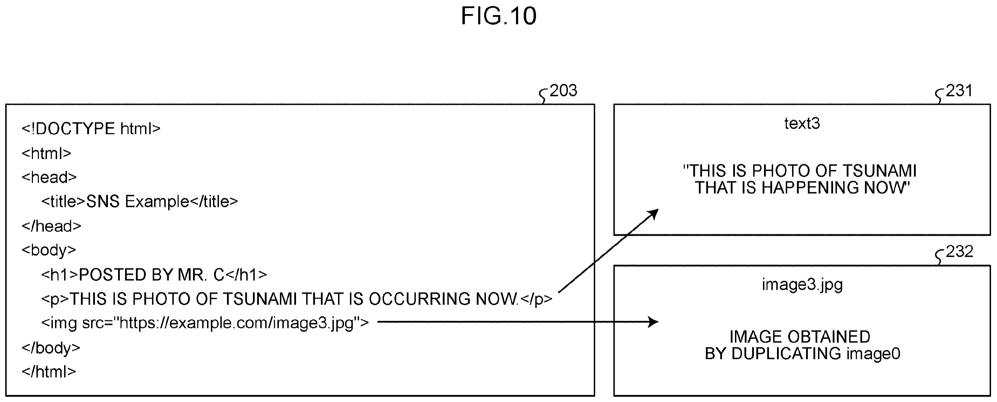

FIG. 10 is a diagram illustrating the determination target information #3. Determination target data 203 is data indicating the determination target information #3 described in html. The determination target data 203 includes a text 231 and an image 232. The text 231 is an original sentence regarding the image 220 of the target false information data 200. The image 232 is an image obtained by duplicating the image 220 of the target false information data 200. The determination target information #3 is information that cites a portion of the target false information but is not a clip of the target false information.

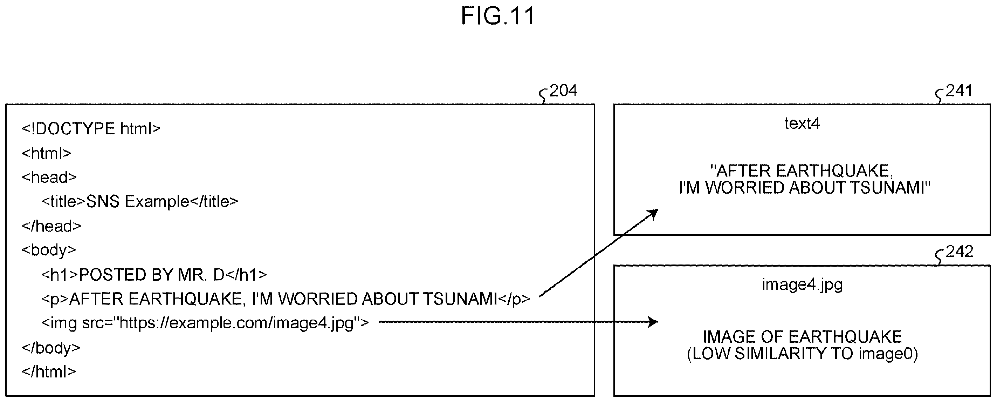

FIG. 11 is a diagram illustrating the determination target information #4. Determination target data 204 is data indicating the determination target information #4 described in html. The determination target data 204 includes a text 241 and an image 242. The text 241 is the original sentence for the image 242. The image 242 is an image having similar contents but having a low similarity with the image 220 of the target false information data 200. The determination target information #4 is information having little association with the target false information.

Referring back to FIG. 1, the description is continued. The modality decomposition unit 14 acquires the determination target data 201 to 204 indicating each of the determination target information #1 to #4 from the reception unit 15. Next, the modality decomposition unit 14 decomposes the determination target data 201 to 204 into modalities. For example, the modality decomposition unit 14 decomposes the determination target data 201 to 204 into modalities by extracting data for each tag of html.

The modality of the determination target data 201 includes the text 211 and the image 212. Also, the modality of the determination target data 202 includes the text 221 and the image 222. Also, the modality of the determination target data 203 includes the text 231 and the image 232. Also, the modality of the determination target data 204 includes the text 241 and the image 242.

Then, the modality decomposition unit 14 stores each modality of the determination target data 201 to 204 in the modality data store 101. Here, the modality decomposition unit 14 may store the modality used for similarity determination with each modality of the target false information among the generated modalities in the modality data store 101. Note that the modality decomposition unit 14 may also cause the target false information to be subjected to the modality decomposition and the storage in the modality data store 101 in advance.

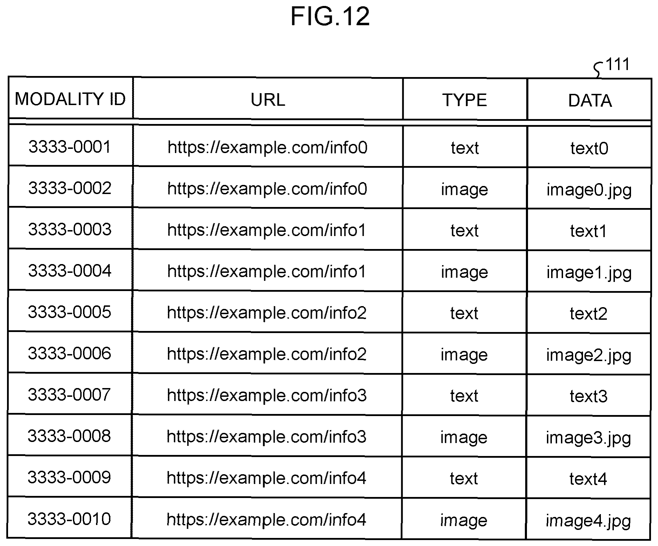

FIG. 12 is a diagram illustrating an example of the modality data after the modality decomposition. The modality decomposition unit 14 causes the modality data store 101 to store modality data 111 including information of each modality of the generated determination target data 201 to 204.

In the modality data 111, the modality ID of the text 211 that is the modality of the determination target data 201 is 3333-0003, and the modality ID of the image 212 is 3333-0004. Also, in the modality data 111, the modality ID of the text 221 that is the modality of the determination target data 202 is 3333-0005, and the modality ID of the image 222 is 3333-0006. Also, in the modality data 111, the modality ID of the text 231 that is the modality of the determination target data 203 is 3333-0007, and the modality ID of the image 232 is 3333-0008. Also, in the modality data 111, the modality ID of the text 241 that is the modality of the determination target data 204 is 3333-0009, and the modality ID of the image 242 is 3333-0010.

The modality decomposition unit 14 registers a URL indicating a storage location of each piece of data, a data type, and a name in association with each modality ID in the modality data 111.

The modality decomposition unit 14 corresponds to an example of a "decomposition unit", and each modality of the determination target data 201 to 204 corresponds to an example of "first unit information". That is, the decomposition unit decomposes the content existing on the network into the first unit information based on the format.

Referring back to FIG. 1, the description is continued. The similarity classification processing unit 11 acquires data of each modality from the storage location designated in the modality data 111 with reference to the modality data store 101. When the acquired data is media data such as an image, the similarity classification processing unit 11 may perform preprocessing for vectorization such as conversion into a byte format.

Next, the similarity classification processing unit 11 performs vectorization on the data of each modality of the determination target information #1 to #4 and the data of the modality of the target false information. The similarity classification processing unit 11 can perform conversion in which meaning and characteristics of data are captured by using a language model at the time of vectorization.

Next, the similarity classification processing unit 11 calculates similarity between each piece of data of the modality of the target false information and the modality of the determination target information. In the present embodiment, the similarity classification processing unit 11 and the similarity classification processing unit 11 calculate a cosine similarity from an inner product of two vectors of each data of modalities of the target false information and each data of modalities of the determination target information #1 to #4.

In the calculation of the similarity, the similarity classification processing unit 11 can efficiently specify similar modalities by narrowing down combinations of modalities to be compared to the same data type or data types of the same system. In the present embodiment, texts and images are provided as data types, and the similarity classification processing unit 11 performs comparison between modalities whose data types are texts and between modalities whose data types are images. However, the data type is not limited thereto and may be metadata such as a moving image or a posted date and time. Note that, when the data type is not used, the similarity classification processing unit 11 may compare the similarity in a round robin manner.

Then, for each of the modalities of the determination target information #1 to #4, the similarity classification processing unit 11 specifies a modality having the highest cosine similarity among the modalities of the target false information as a similar modality. Then, for each of the modalities of the determination target information #1 to #4, the similarity classification processing unit 11 sets the cosine similarity having the highest value as the cosine similarity of the modality.

Next, the similarity classification processing unit 11 calculates a total value of the similarity using the calculated cosine similarity by Formula (1).${S}_{ovr} = \frac{{Σ}_{n = 1}^{N} {S}_{mn}}{N}$ (1)

Here, S_{OVR} is a total value of the similarity. In addition, N is the total number of modalities for each of the determination target information #1 to #4. Also, Sₘₙ is a cosine similarity of each modality.

For example, the similarity classification processing unit 11 calculates a total value of similarity for the determination target information #1 as follows. The similarity classification processing unit 11 calculates a cosine similarity between the modality having the modality ID of 3333-0001 and the modality having the modality ID of 3333-0003 in the modality data 111 as 1.0. In addition, the similarity classification processing unit 11 calculates a cosine similarity between the modality having the modality ID of 3333-0002 and the modality having the modality ID of 3333-0004 in the modality data 111 as 0.9. In this case, the similarity classification processing unit 11 calculates the total value of the similarity of the determination target information #1 as (1.0 + 0.9)/2 = 0.95.

Also, the similarity classification processing unit 11 calculates a total value of the similarity for the determination target information #2 as follows. The similarity classification processing unit 11 calculates a cosine similarity between the modality having the modality ID of 3333-0001 and the modality having the modality ID of 3333-0005 in the modality data 111 as 0.72. In addition, the similarity classification processing unit 11 calculates a cosine similarity between the modality having the modality ID of 3333-0002 and the modality having the modality ID of 3333-0006 in the modality data 111 as 0.9. In this case, the similarity classification processing unit 11 calculates the total value of the similarity of the determination target information #2 as (0.72 + 0.9)/2 = 0.81.

Also, the similarity classification processing unit 11 calculates a total value of the similarity for the determination target information #3 as follows. The similarity classification processing unit 11 calculates a cosine similarity between the modality having the modality ID of 3333-0001 and the modality having the modality ID of 3333-0007 in the modality data 111 as 0.5. In addition, the similarity classification processing unit 11 calculates a cosine similarity between the modality having the modality ID of 3333-0002 and the modality having the modality ID of 3333-0008 in the modality data 111 as 0.9. In this case, the similarity classification processing unit 11 calculates the total value of the similarity of the determination target information #3 as (0.5 + 0.9)/2 = 0.7.

Also, the similarity classification processing unit 11 calculates a total value of the similarity for the determination target information #4 as follows. The similarity classification processing unit 11 calculates a cosine similarity between the modality having the modality ID of 3333-0001 and the modality having the modality ID of 3333-0009 in the modality data 111 as 0.25. In addition, the similarity classification processing unit 11 calculates a cosine similarity between the modality having the modality ID of 3333-0002 and the modality having the modality ID of 3333-0010 in the modality data 111 as 0.25. In this case, the similarity classification processing unit 11 calculates the total value of the similarity of the determination target information #4 as (0.25 + 0.25)/2 = 0.25.

The similarity classification processing unit 11 outputs a total value of the similarity of the determination target information #1 to #4 to the false information label assigning unit 12. In addition, the similarity classification processing unit 11 outputs the cosine similarity for each modality of the determination target information #1 to #4 to the description label assigning unit 13.

In this manner, the similarity classification processing unit 11 calculates the similarity between the false information and the second unit information included in the determined target false information for each of the first unit information. In addition, the similarity classification processing unit 11 calculates a total value of the similarity based on the similarity.

The false information label assigning unit 12 has a false information determination threshold value in advance. The false information label assigning unit 12 receives the input of the total value of the similarity of each of the determination target information #1 to #4 from the similarity classification processing unit 11. Then, the false information label assigning unit 12 compares the total value of the similarity of each of the determination target information #1 to #4 with the false information determination threshold value and sets the determination target information in which the total value of the similarity is equal to or greater than the false information determination threshold value as the similar false information.

Then, the false information label assigning unit 12 acquires the false information label of the target false information from the false information label data 120 of the false information label data store 102. Then, the false information label assigning unit 12 assigns the false information label of the target false information to the similar false information among the determination target information #1 to #4 and stores the labeling data in the labeling data store 104.

For example, the false information label assigning unit 12 has 0.8 as the false information determination threshold value. In this case, since the total value of the similarity of the determination target information #1 is 0.95 and is equal to or greater than the false information determination threshold value, the false information label assigning unit 12 determines the determination target information #1 as the similar false information. Also, since the total value of the similarity of the determination target information #2 is 0.81 and is equal to or greater than the false information determination threshold value, the false information label assigning unit 12 determines the determination target information #2 as the similar false information. On the other hand, since the total value of the similarity of the determination target information #3 is 0.7 and is less than the false information determination threshold value, the false information label assigning unit 12 determines that the determination target information #3 is not the similar false information. Also, since the total value of the similarity of the determination target information #4 is 0.25 and is less than the false information determination threshold value, the false information label assigning unit 12 determines that the determination target information #4 is not the similar false information.

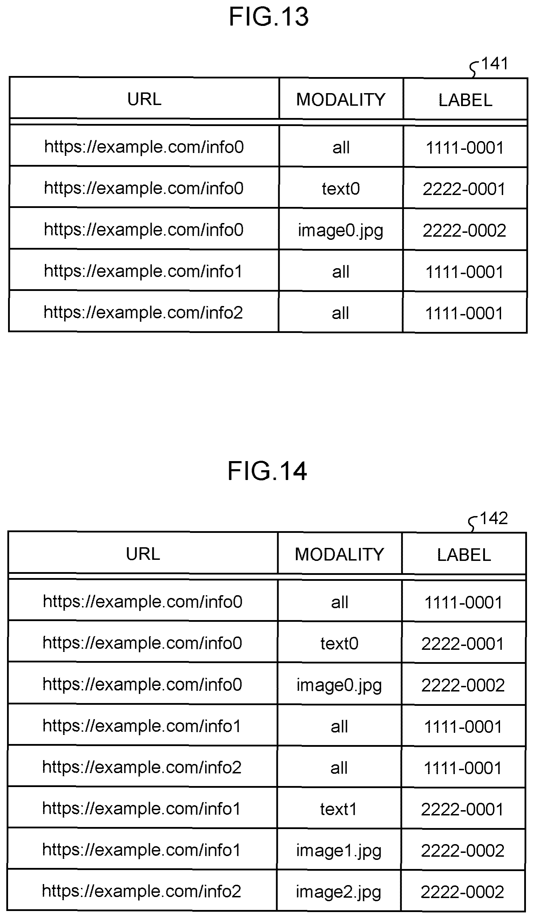

Then, the false information label assigning unit 12 assigns 1111-0001, which is the false information ID of the false information label of the target false information, in association with the storage positions and the names of the determination target information #1 and #2 and stores the labeling data in the labeling data store 104. FIG. 13 is a diagram illustrating an example of the labeling data after false information label assignment. In this case, the false information label assigning unit 12 causes labeling data 141 illustrated in FIG. 13 to be stored in the labeling data store 104. In addition, since it is determined that the determination target information #3 and #4 is not similar false information, the labeling apparatus 1 ends the labeling processing for the determination target information #3 and #4.

The false information label assigning unit 12 corresponds to an example of a "second label assigning unit", the false information determination threshold value corresponds to an example of a "second threshold value", and the false information label corresponds to an example of a "second label". That is, when the total value of the similarity between the content and the target false information is equal to or greater than the second threshold value, the second label assigning unit assigns the second label assigned to the target false information to the content.

Referring back to FIG. 1, the description is continued. The description label assigning unit 13 has a description assignment determination threshold value in advance. The description label assigning unit 13 receives an input of a cosine similarity for each modality of the determination target information #1 to #4 from the similarity classification processing unit 11. Further, the description label assigning unit 13 refers to the labeling data 141 stored in the labeling data store 104 and confirms that the determination target information #1 and #2 are similar false information. Then, the description label assigning unit 13 compares the cosine similarity with the description assignment determination threshold value for each modality of the determination target information #1 and #2 and determines a modality in which the cosine similarity is equal to or greater than the description assignment determination threshold value as the modality to which the description label is assigned. Here, the modality of the target false information with which the cosine similarity of the modality determined to be assigned the description label is matched is simply referred to as a "modality of corresponding target false information".

The description label assigning unit 13 acquires the description label assigned to the modality of the target false information corresponding to the modality determined to assign the description label from the description label data 130 of the description label data store 103. Then, the description label assigning unit 13 assigns the acquired description label to the modality determined to assign the description label and stores the acquired description label in the labeling data store 104.

For example, the description label assigning unit 13 has 0.8 as the description assignment determination threshold value. In this case, the description label assigning unit 13 determines that the cosine similarities of the modalities having the modality IDs of 3333-0003, 3333-0004, or 3333-0006 among the modalities of the determination target information #1 and #2 are equal to or greater than the description assignment determination threshold value. Then, the description label assigning unit 13 assigns the description label of the modality of the target false information corresponding to each of the modalities having the modality IDs of 3333-0003, 3333-0004, or 3333-0006. Thereafter, the description label assigning unit 13 stores the information of the modalities having the modality IDs of 3333-0003, 3333-0004, or 3333-0006 in the labeling data store 104.

FIG. 14 is a diagram illustrating an example of the labeling data after description label assignment. The description label assigning unit 13 assigns the description label having the description ID of 2222-0001 in the description label data 130 of FIG. 6 in association with the storage position and name of the modality having the modality ID of 3333-0003 and stores the description label in the labeling data store 104. Also, the description label assigning unit 13 assigns the description label having the description ID of 2222-0002 in the description label data 130 in association with the storage position and name of the modality having the modality ID of 3333-0004 and stores the description label in the labeling data store 104. Also, the description label assigning unit 13 assigns the description label having the description ID of 2222-0002 in the description label data 130 in association with the storage position and name of the modality having the modality ID of 3333-0006 and stores the description label in the labeling data store 104. As a result, the description label assigning unit 13 causes labeling data 142 illustrated in FIG. 14 to be stored in the labeling data store 104.

The description label assigning unit 13 is an example of a "first label assigning unit", the description assignment determination threshold value is an example of a "first threshold value", and the description label is an example of a "first label". That is, the "first label assigning unit assigns, for each piece of the first unit information, the first label assigned to the second unit information having the similarity equal to or greater than the first threshold value. More specifically, the first label assigning unit assigns the first label to the first unit information to the content to which the second label is assigned.

Referring back to FIG. 1, the description is continued. The transmission unit 16 acquires, from the labeling data store 104, the labeling data 142 for which the assignment of the description label is completed by the description label assigning unit 13. Then, the transmission unit 16 transmits the labeling data 142 to the user terminal device 3. Also, the transmission unit 16 also transmits the false information label data 120 stored in the false information label data store 102 and the description label data 130 stored in the description label data store 103 to the user terminal device 3.

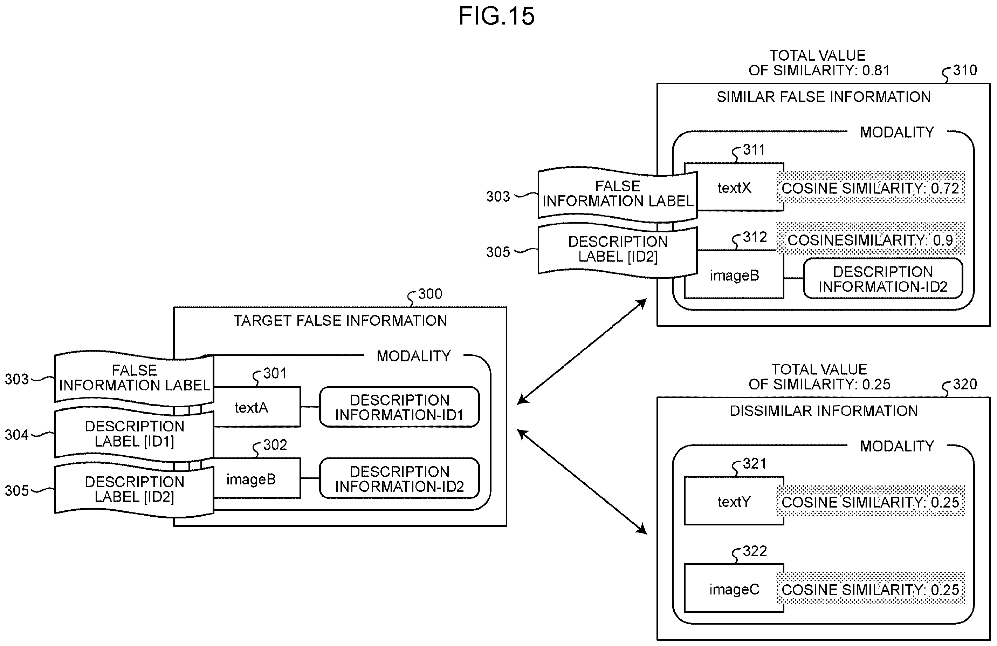

FIG. 15 is a diagram illustrating an outline of labeling processing according to the first embodiment. Next, with reference to FIG. 15, the outline of labeling processing by the labeling apparatus 1 according to the first embodiment is described.

For example, the labeling apparatus 1 has information of target false information 300 in advance. That is, modalities 301 and 302 are obtained from the target false information data of the target false information 300, and the information is stored in the modality data store 101. In addition, the false information label data store 102 stores a false information label 303 for the target false information 300. The description label data store 103 stores a description ID and description information of a description label 304 for the modality 301 and a description ID and description information of a description label 305 for the modality 302.

When the determination target information is similar false information 310, the modality decomposition unit 14 performs modality decomposition, acquires modalities 311 and 312, and stores the modalities 311 and 312 in the modality data store 101.

The similarity classification processing unit 11 sets 0.72, which is a cosine similarity between the modality 311 and the modality 301, as the cosine similarity of the modality 311. Also, the similarity classification processing unit 11 sets 0.9, which is a cosine similarity between the modality 312 and the modality 302, as the cosine similarity of the modality 312. Then, the similarity classification processing unit 11 calculates a total value of the similarity of the similar false information 310 as 0.81.

When the false information determination threshold value is 0.8, the false information label assigning unit 12 confirms that the similar false information 310 is the similar false information since the total value of the similarity of the similar false information 310 is equal to or greater than the false information determination threshold value. Then, the false information label assigning unit 12 assigns the false information label 303 to the similar false information 310 and stores the similar false information 310 in the labeling data store 104.

When the description assignment determination threshold value is 0.8, since the cosine similarity of the modality 311 is less than the description assignment determination threshold value, the description label assigning unit 13 determines not to assign a description label to the modality 311. Meanwhile, since the cosine similarity of the modality 312 is equal to or greater than the description assignment determination threshold value, the description label assigning unit 13 determines to assign the description label 305 to the modality 312. Then, the description label assigning unit 13 assigns the description label 305 to the modality 312 and stores the modality in the labeling data store 104.

Next, when the determination target information is dissimilar information 320, the modality decomposition unit 14 performs modality decomposition to acquire modalities 321 and 322 and stores the information in the modality data store 101.

The similarity classification processing unit 11 sets 0.25, which is a cosine similarity between modality 321 and the modality 301, as the cosine similarity of the modality 321. Also, the similarity classification processing unit 11 sets 0.25, which is a cosine similarity between the modality 322 and the modality 302, as the cosine similarity of the modality 312. Then, the similarity classification processing unit 11 calculates a total value of the similarity of the dissimilar information 320 as 0.25.

When the false information determination threshold value is 0.8, the false information label assigning unit 12 determines that the dissimilar information 320 is not the similar false information since the total value of the similarity of the dissimilar information 320 is less than the false information determination threshold value. In this case, the labeling apparatus 1 ends the labeling processing for the dissimilar information 320.

Referring back to FIG. 1, the description is continued. As illustrated in FIG. 1, the user terminal device 3 includes a display unit 31, a label information processing unit 32, a browsing processing unit 33, a reception unit 34, and a transmission unit 35.

The browsing processing unit 33 receives designation of a URL of a web page to be browsed from the user. Next, the browsing processing unit 33 accesses the URL designated via the transmission unit 35. Also, the browsing processing unit 33 notifies the label information processing unit 32 of the URL of the access destination. Next, the browsing processing unit 33 receives the data of the accessed web page of the URL via the reception unit 34. Then, the browsing processing unit 33 displays the display screen of the web page with the URL designated on the display unit 31 using the received data.

The label information processing unit 32 acquires the labeling data 142, the false information label data 120, and the description label data 130 transmitted from the labeling apparatus 1 via the reception unit 34. The label information processing unit 32 receives the notification of the URL of the access destination from the browsing processing unit 33. Then, the label information processing unit 32 determines whether the URL of the access destination exists in the labeling data 142.

When the URL of the access destination exists in the labeling data 142, the label information processing unit 32 acquires information of the false information ID corresponding to the data indicated by the URL of the access destination and the description ID corresponding to the modality included in the data. Next, the label information processing unit 32 refers to the false information label data 120 and the description label data 130 to acquire the description information of the false information label and the description label corresponding to the false information ID and the description ID. Then, the label information processing unit 32 adds the description information of the false information label and the description label to the display screen displayed on the display unit 31 by the browsing processing unit 33 and causes the display unit 31 to display the display screen as a false information display screen. As a result, the user terminal device 3 performs warning and auxiliary description to the user.

In a case of displaying the determination target information #1, which is the duplicate information of the target false information, the label information processing unit 32 displays the following false information display screen on the display unit 31. The label information processing unit 32 displays a false information display screen that gives a warning indicating false information similarly to the target false information and to which a description that the tsunami information in the text is erroneous, and the image is generated by AI are assigned as descriptions is assigned. When the determination target information #2 that is clip information of the target false information is displayed, the label information processing unit 32 causes the display unit 31 to display a false information display screen that gives a warning indicating false information and to which a description that the image is generated by AI is assigned.

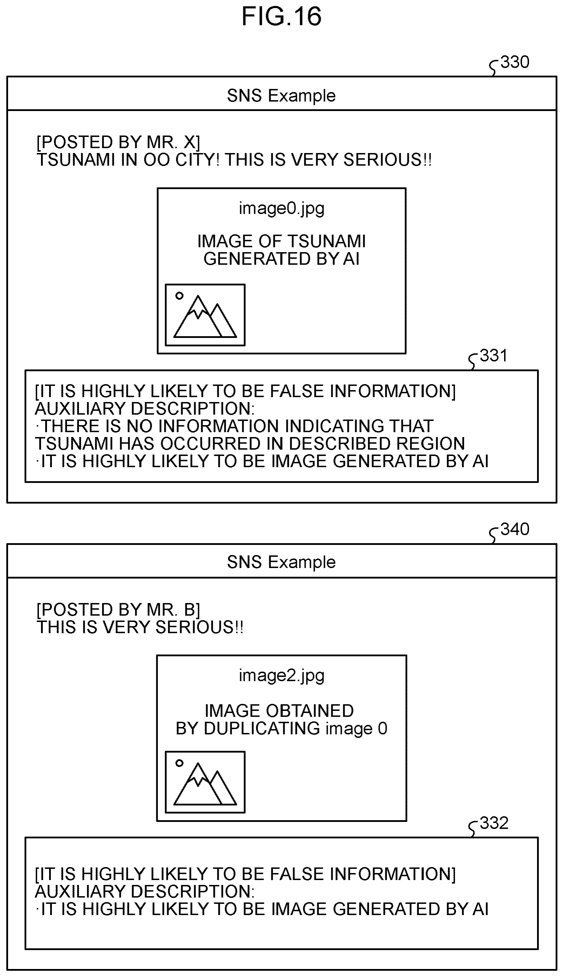

FIG. 16 is a diagram illustrating an example of the false information display screen. A false information display screen 330 is a screen that displays the target false information. The label information processing unit 32 causes the display unit 31 to display the false information display screen 330 in which information 331 of the false information label and the description label generated for the target false information and the modality thereof are added to the text and the image of the target false information.

A false information display screen 340 is a screen that displays the determination target information #2. The label information processing unit 32 causes the display unit 31 to display the false information display screen 340 in which information 332 of the false information label and the description label with respect to the determination target information #2 and the target false information assigned to the modality is added to the text and the image of the determination target information #2. Since there is no topic of the tsunami in the text of the determination target information #2, the description without the occurrence information of the tsunami with the description ID of 2222-0001 is not assigned to the false information display screen 340. In this manner, the label information processing unit 32 displays adequate information on the false information display screen 340 without intervening in a modality having a weak relationship with the false information.

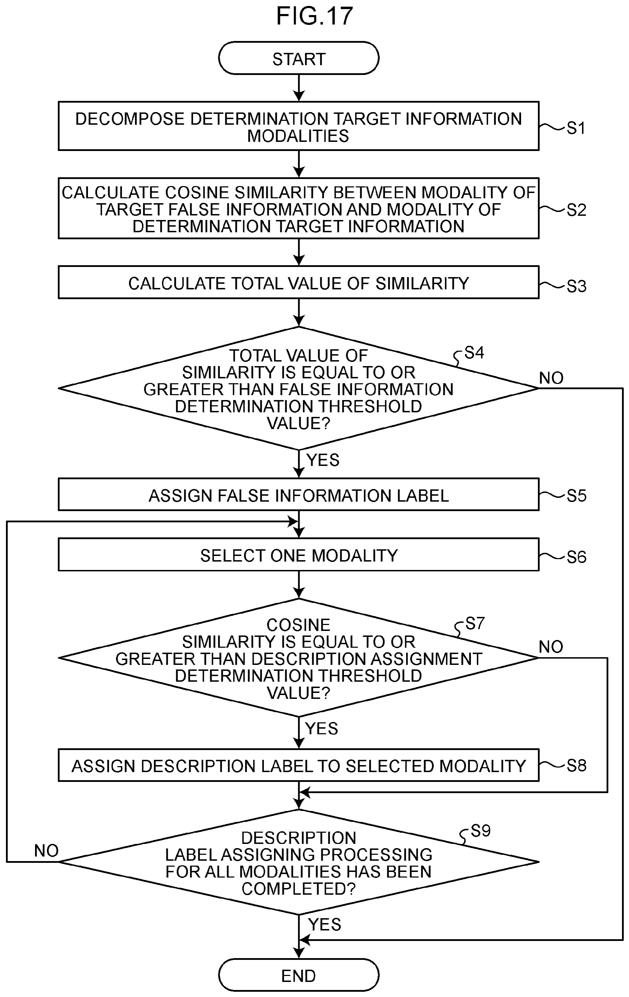

FIG. 17 is a flowchart of the labeling processing according to the first embodiment. Next, with reference to FIG. 17, the outline of the labeling processing by the labeling apparatus 1 according to the present embodiment is described.

The modality decomposition unit 14 decomposes the determination target information into modalities (step S1). The modality decomposition unit 14 stores modality data regarding the modality obtained by decomposition in the modality data store 101.

The similarity classification processing unit 11 calculates a cosine similarity between the modality of the target false information and the modality of the determination target information (step S2).

Next, the similarity classification processing unit 11 calculates a total value of the similarity of the determination target information by using the cosine similarity of each modality of the determination target information (step S3).

The false information label assigning unit 12 determines whether the total value of the similarity of the determination target information is equal to or greater than the false information determination threshold value (step S4). When the total value of the similarity of the determination target information is less than the false information determination threshold value (step S4: No), the labeling apparatus 1 ends the labeling processing.

On the other hand, when the total value of the similarity of the determination target information is equal to or greater than the false information determination threshold value (step S4: Yes), the false information label assigning unit 12 assigns the false information label of the target false information acquired from the false information label data store 102 to the determination target information (step S5). The false information label assigning unit 12 stores labeling data indicating assignment of a false information label to the determination target information in the labeling data store 104.

The description label assigning unit 13 selects one modality of the determination target information (step S6).

Next, the description label assigning unit 13 determines whether a cosine similarity of the selected modality is equal to or greater than the description assignment determination threshold value (step S7). When the cosine similarity is less than the description assignment determination threshold value (step S7: No), the description label assigning unit 13 proceeds to step S9.

On the other hand, when the cosine similarity is equal to or greater than the description assignment determination threshold value (step S7: Yes), the description label assigning unit 13 assigns the description label of the modality of the target false information used for calculating the cosine similarity to the selected modality (step S8). The description label assigning unit 13 stores labeling data indicating that the description label is assigned to the selected modality in the labeling data store 104.

Thereafter, the description label assigning unit 13 determines whether description label assigning processing for all modalities of the determination target information has been completed (step S9). When there remains a modality on which the description labeling processing has not been performed (step S9: No), the description label assigning unit 13 returns to step S6.

On the other hand, when the description label assigning processing for all the modalities of the determination target information has been completed (step S9: Yes), the labeling apparatus 1 ends the labeling processing.

As described above, the labeling apparatus 1 according to the present embodiment specifies determination target information similar to the target false information, and for each modality of the specified determination target information, if a similar modality exists in the target false information, the labeling apparatus 1 assigns a description label similar to that modality. In this manner, the labeling apparatus 1 can efficiently specify the common portion even for the clipped or partially modified similar false information by decomposing the determination target information into modalities and comparing the similarity. As a result, the labeling apparatus 1 can specify a portion corresponding to the description information generated based on the true/false determination result for the target false information from the determination target and assign a required and sufficient description label. In addition, the labeling apparatus 1 can assign a label to the similar false information by reusing the information of the label of the target false information without generating a label based on each true/false determination for each determination target information. Therefore, the labeling apparatus 1 can efficiently assign a label and can provide an effective false information countermeasure.

### (b) Second Embodiment

Next, a second embodiment is described. The false information countermeasure system 100 and the labeling apparatus 1 according to the present embodiment are also illustrated in the block diagram of FIG. 1. The labeling apparatus 1 according to the present embodiment weights the similarity for each modality and calculates a total value of the similarity. In the following description, description of operation of each unit similar to that of the first embodiment may be omitted.

The labeling apparatus 1 executes assigning processing of the false information label and the description label by using the target false information indicated by the target false information data 200 illustrated in FIG. 3. In addition, the labeling apparatus 1 includes, as an initial state, the modality data 110 illustrated in FIG. 4, the false information label data 120 illustrated in FIG. 5, the description label data 130 illustrated in FIG. 6, and the labeling data 140 illustrated in FIG. 7. Then, the labeling apparatus 1 assigns the false information label and the description label to the determination target information #1 to #4 illustrated in FIGS. 8 to 11.

The modality decomposition unit 14 performs modality decomposition on each of the determination target information #1 to #4 and stores the modality data 111 illustrated in FIG. 12 in the modality data store 101.

The similarity classification processing unit 11 vectorizes each modality of the determination target information #1 to #4 and calculates a cosine similarity with each modality of the target false information.

The similarity classification processing unit 11 has information of a weight corresponding to a degree of importance for each modality. The degree of importance for each modality is set as follows according to an attribute of the modality such as a data type. For example, in the case of an SNS that performs posting based on images, the similarity of information of images is more important than the similarity of information of texts, and thus the degree of importance of modality of images is set higher than the degree of importance of modality of texts.

For example, the similarity classification processing unit 11 calculates a total value of the similarity by Formula (2). Here, αₙ is a weight to be added to each modality.${S}_{ovr} = \frac{{Σ}_{n = 1}^{N} {α}_{n} {S}_{mn}}{{Σ}_{n = 1}^{N} {α}_{n}}$ (2)

In the present embodiment, for example, a weight α₁ of the modality of which the data type is a text is 1, and a weight α₂ of the modality of which the data type is an image is 4. The similarity classification processing unit 11 has information that α₁ = 1 and α₂ = 4.

In this case, the similarity classification processing unit 11 calculates the total value of the similarity for the determination target information #1 as follows. The similarity classification processing unit 11 calculates a cosine similarity between the modality having the modality ID of 3333-0001 and the modality having the modality ID of 3333-0003 in the modality data 111 as 1.0. In addition, the similarity classification processing unit 11 calculates a cosine similarity between the modality having the modality ID of 3333-0002 and the modality having the modality ID of 3333-0004 in the modality data 111 as 0.9. The similarity classification processing unit 11 calculates the total value of the similarity of the determination target information #1 as (1 × 1.0 + 4 × 0.9)/5 = 0.92.

Also, the similarity classification processing unit 11 calculates a total value of the similarity for the determination target information #2 as follows. The similarity classification processing unit 11 calculates a cosine similarity between the modality having the modality ID of 3333-0001 and the modality having the modality ID of 3333-0005 in the modality data 111 as 0.72. In addition, the similarity classification processing unit 11 calculates a cosine similarity between the modality having the modality ID of 3333-0002 and the modality having the modality ID of 3333-0006 in the modality data 111 as 0.9. In this case, the similarity classification processing unit 11 calculates the total value of the similarity of the determination target information #2 as (1 × 0.72 + 4 × 0.9)/5 = 0.864.

Also, the similarity classification processing unit 11 calculates a total value of the similarity for the determination target information #3 as follows. The similarity classification processing unit 11 calculates a cosine similarity between the modality having the modality ID of 3333-0001 and the modality having the modality ID of 3333-0007 in the modality data 111 as 0.5. In addition, the similarity classification processing unit 11 calculates a cosine similarity between the modality having the modality ID of 3333-0002 and the modality having the modality ID of 3333-0008 in the modality data 111 as 0.9. In this case, the similarity classification processing unit 11 calculates the total value of the similarity of the determination target information #3 as (1 × 0.5 + 4 × 0.9)/5 = 0.82.

Also, the similarity classification processing unit 11 calculates a total value of the similarity for the determination target information #4 as follows. The similarity classification processing unit 11 calculates a cosine similarity between the modality having the modality ID of 3333-0001 and the modality having the modality ID of 3333-0009 in the modality data 111 as 0.25. In addition, the similarity classification processing unit 11 calculates a cosine similarity between the modality having the modality ID of 3333-0002 and the modality having the modality ID of 3333-0010 in the modality data 111 as 0.25. In this case, the similarity classification processing unit 11 calculates the total value of the similarity of the determination target information #4 as (1 × 0.25 + 4 × 0.25)/5 = 0.25.

In this manner, the similarity classification processing unit 11 calculates the total value of the similarity based on the similarity and the weight allocated to the first unit information.

The false information label assigning unit 12 has 0.8 as the false information determination threshold value. In this case, since the total value of the similarity of the determination target information #1 is 0.95 and is equal to or greater than the false information determination threshold value, the false information label assigning unit 12 determines the determination target information #1 as the similar false information. Also, since the total value of the similarity of the determination target information #2 is 0.864 and is equal to or greater than the false information determination threshold value, the false information label assigning unit 12 determines the determination target information #2 as the similar false information. Also, since the total value of the similarity of the determination target information #3 is 0.82 and is equal to or greater than the false information determination threshold value, the false information label assigning unit 12 determines the determination target information #3 as the similar false information. On the other hand, since the total value of the similarity of the determination target information #4 is 0.25 and is less than the false information determination threshold value, the false information label assigning unit 12 determines that the determination target information #4 is not the similar false information.

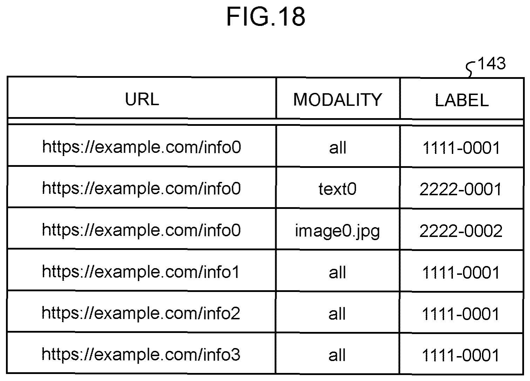

Then, the false information label assigning unit 12 assigns 1111-0001, which is the false information ID of the false information label of the target false information, in association with the storage position and the name of each of the determination target information #1 to #3 and stores the labeling data in the labeling data store 104. FIG. 18 is a diagram illustrating an example of labeling data after false information label assignment according to a second embodiment. In this case, the false information label assigning unit 12 causes labeling data 143 illustrated in FIG. 18 to be stored in the labeling data store 104. In addition, since it is determined that the determination target information #4 is not similar false information, the labeling apparatus 1 ends the labeling processing for the determination target information #4.

When the weights of the modalities are the same, the false information label assigning unit 12 does not determine the determination target information #3 having a low cosine similarity of the modality of which the data type is a text as the similar false information. On the other hand, when the modality having the data type of an image is weighted to be heavier than the modality having the data type of a text, the false information label assigning unit 12 determines the determination target information #3 using the same image as the target false information as the similar false information. Furthermore, the false information label assigning unit 12 determines that the determination target information #4 having a low similarity to the target information is not similar false information as in the case where the weights are the same.

Referring back to FIG. 1, the description is continued. In the present embodiment, the description label assigning unit 13 has 0.8 as the description assignment determination threshold value. In this case, the false information label assigning unit 12 determines that the cosine similarities of the modalities having the modality IDs of 3333-0003, 3333-0004, 3333-0006, or 3333-0008 are equal to or greater than the description assignment determination threshold value. Then, the description label assigning unit 13 assigns the description label of the modality of the target false information corresponding to each of the modalities having the modality IDs of 3333-0003, 3333-0004, 3333-0006, or 3333-0008. Then, the description label assigning unit 13 stores the information of the modalities having the modality IDs of 3333-0003, 3333-0004, 3333-0006, or 3333-0008 in the labeling data store 104.

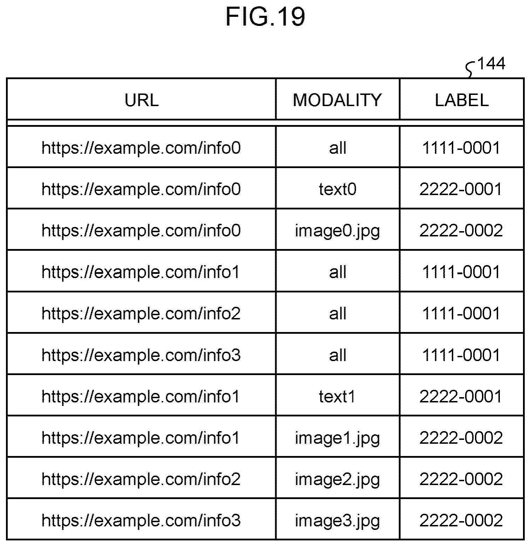

FIG. 19 is a diagram illustrating an example of the labeling data after description label assignment according to the second embodiment. The description label assigning unit 13 assigns description labels to the modalities having the modality IDs of 3333-0003, 3333-0004, and 3333-0006, similarly to the first embodiment. Also, the description label assigning unit 13 assigns the description label having the description ID of 2222-0002 in the description label data 130 in association with the storage position and name of the modality having the modality ID of 3333-0008 in the determination target information #3. Then, the description label assigning unit 13 stores the information of the modalities of which the modality IDs are 3333-0003, 3333-0004, 3333-0006, or 3333-0008 in the labeling data store 104. As a result, the description label assigning unit 13 causes labeling data 144 illustrated in FIG. 19 to be stored in the labeling data store 104.

As described above, the labeling apparatus 1 according to the present embodiment performs weighting according to the attribute of the modality and calculates the total value of the similarity of the determination target information #1 to #4. Thus, the labeling apparatus 1 can extract the similar false information in consideration of the feature of each modality. As a pattern in which the specific accuracy of the similar false information is improved in consideration of the feature for each modality, there is a case as follows. For example, there exists similar false information in which an image used in the target false information is an image indicating a shocking situation such as tsunami or fire, the same image is reused, and the text is changed to another text and posted. In this case, since the content of the image gives a greater influence on the cognition of the viewer than the content of the text, the labeling apparatus 1 can accurately extract the similar false information to be a target of the countermeasure by performing the label assigning processing with emphasis on high similarity of the image. Therefore, the labeling apparatus 1 can efficiently assign a description label and can provide an effective false information countermeasure.

### (c) Third Embodiment

Next, a third embodiment is described. The false information countermeasure system 100 and the labeling apparatus 1 according to the present embodiment are also illustrated in the block diagram of FIG. 1. The labeling apparatus 1 according to the present embodiment executes the determination of the similar false information in consideration of the stance of the determination target information with respect to the target false information. In the following description, description of operation of each unit similar to that of the first embodiment may be omitted.

The labeling apparatus 1 executes assigning processing of the false information label and the description label by using the target false information indicated by the target false information data 200 illustrated in FIG. 3. In addition, the labeling apparatus 1 includes, as an initial state, the modality data 110 illustrated in FIG. 4, the false information label data 120 illustrated in FIG. 5, the description label data 130 illustrated in FIG. 6, and the labeling data 140 illustrated in FIG. 7.

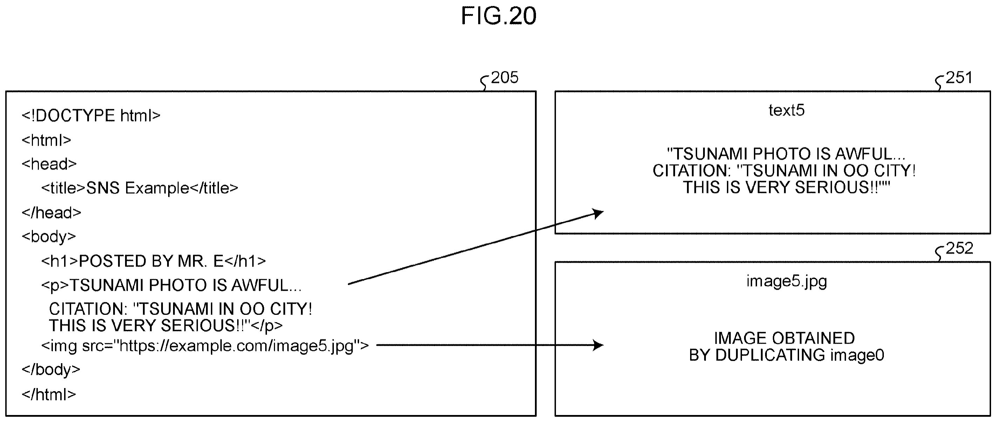

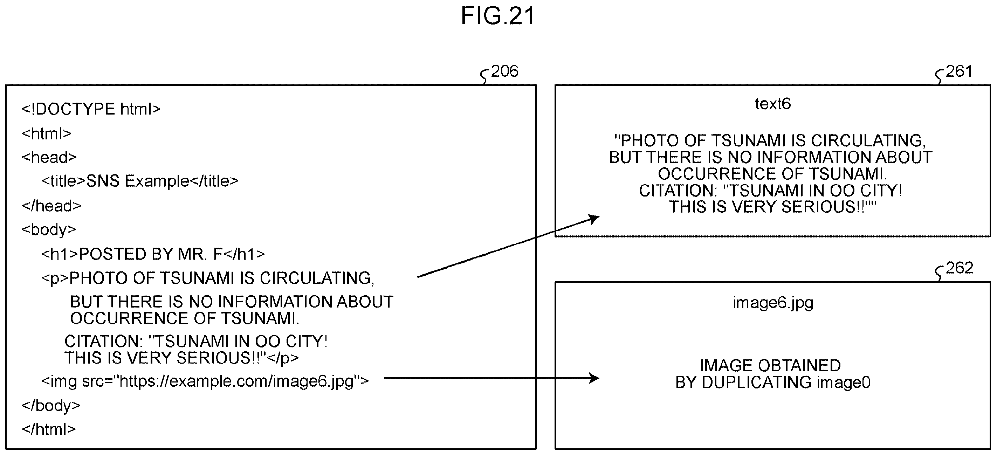

FIG. 20 is a diagram illustrating determination target information #5. Also, FIG. 21 is a diagram illustrating determination target information #6. The labeling apparatus 1 according to the present embodiment executes labeling processing of assigning a false information label and a description label to the determination target information #1 illustrated in FIG. 8, determination target information #5 illustrated in FIG. 20, and the determination target information #6 illustrated in FIG. 21.

Determination target data 205 of FIG. 20 is data indicating the determination target information #5 described in html. The determination target data 205 includes a text 251 and an image 252. The text 251 is information in which a comment of an impression for the target false information is assigned after the text 210 of the target false information data 200 is cited. The image 212 is an image obtained by duplicating the image 220 of the target false information data 200. The determination target information #5 is information having neutral contents with respect to the target false information.

Determination target data 206 of FIG. 21 is data indicating the determination target information #6 described in html. The determination target data 206 includes a text 261 and an image 262. The text 261 is information in which a comment that denies the target false information is assigned after the text 210 of the target false information data 200 is cited. The image 222 is an image obtained by duplicating the image 220 of the target false information data 200. The determination target information #6 is information having contents that deny the target false information.

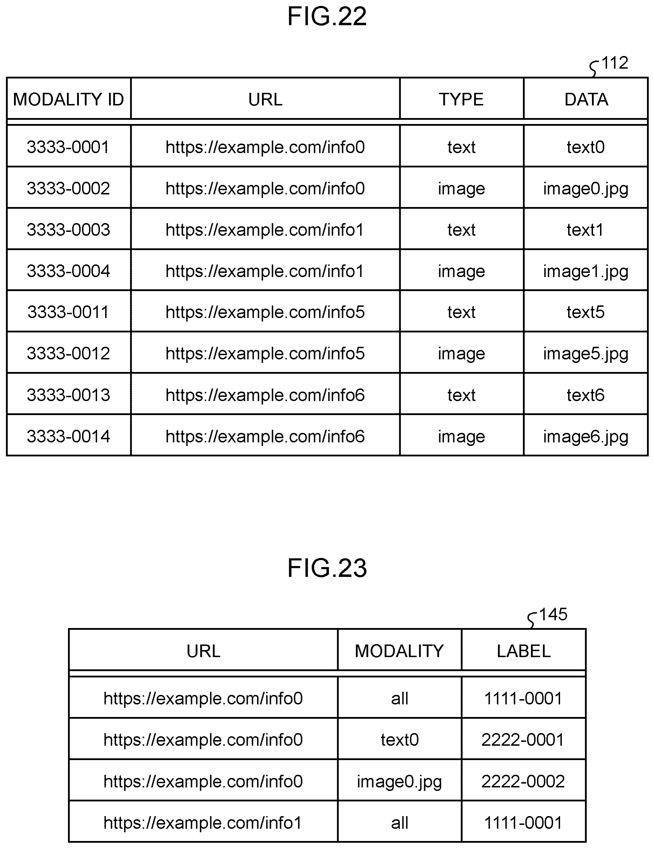

The modality decomposition unit 14 performs modality decomposition on each of the determination target information #1, #5, and #6. FIG. 22 is a diagram illustrating an example of the modality data after modality decomposition according to the third embodiment. The modality decomposition unit 14 stores the modality data 111 illustrated in FIG. 22 in the modality data store 101. Here, 3333-0011 is assigned as the modality ID to the text 251 of the determination target information #5, and 3333-0012 is assigned as the modality ID to the image 252. Also, 3333-0013 is assigned as the modality ID to the text 261 of the determination target information #6, and 3333-0014 is assigned as the modality ID to the image 262.

Referring back to FIG. 1, the description is continued. The similarity classification processing unit 11 vectorizes each modality of the determination target information #1, #5, and #6 and calculates a cosine similarity with each modality of the target false information.

The similarity classification processing unit 11 calculates a total value of the similarity by Formula (1). The similarity classification processing unit 11 calculates a total value of the similarity for the determination target information #1 as follows. The similarity classification processing unit 11 calculates a cosine similarity between the modality having the modality ID of 3333-0001 and the modality having the modality ID of 3333-0003 in the modality data 111 as 1.0. In addition, the similarity classification processing unit 11 calculates a cosine similarity between the modality having the modality ID of 3333-0002 and the modality having the modality ID of 3333-0004 in the modality data 111 as 0.9. The similarity classification processing unit 11 calculates the total value of the similarity of the determination target information #1 as (1.0 + 0.9)/2 = 0.95.

Also, the similarity classification processing unit 11 calculates a total value of the similarity for the determination target information #5 as follows. The similarity classification processing unit 11 calculates a cosine similarity between the modality having the modality ID of 3333-0001 and the modality having the modality ID of 3333-0011 in the modality data 111 as 0.76. In addition, the similarity classification processing unit 11 calculates a cosine similarity between the modality having the modality ID of 3333-0012 and the modality having the modality ID of 3333-0006 in the modality data 111 as 0.9. In this case, the similarity classification processing unit 11 calculates the total value of the similarity of the determination target information #2 as (0.76 + 4 × 0.9)/2 = 0.83.

Also, the similarity classification processing unit 11 calculates a total value of the similarity for the determination target information #6 as follows. The similarity classification processing unit 11 calculates a cosine similarity between the modality having the modality ID of 3333-0001 and the modality having the modality ID of 3333-0013 in the modality data 111 as 0.78. In addition, the similarity classification processing unit 11 calculates a cosine similarity between the modality having the modality ID of 3333-0002 and the modality having the modality ID of 3333-0014 in the modality data 111 as 0.9. In this case, the similarity classification processing unit 11 calculates the total value of the similarity of the determination target information #3 as (0.78 + 0.9)/2 = 0.84.

The false information label assigning unit 12 has 0.8 as the false information determination threshold value. In this case, since the total value of the similarity of the determination target information #1 is 0.95 and is equal to or greater than the false information determination threshold value, the false information label assigning unit 12 determines the determination target information #1 as the similar false information. Also, since the total value of the similarity of the determination target information #5 is 0.83 and is equal to or greater than the false information determination threshold value, the false information label assigning unit 12 determines the determination target information #5 as the similar false information. Also, since the total value of the similarity of the determination target information #6 is 0.84 and is equal to or greater than the false information determination threshold value, the false information label assigning unit 12 determines the determination target information #6 as the similar false information.

Next, the false information label assigning unit 12 executes stance detection for determining a stance with respect to the target false information for the determination target information #1, #5, and #6 determined as the similar false information. The false information label assigning unit 12 detects the stance of each of the determination target information #1, #5, and #6 with respect to the target false information to classify whether the information is an affirmative, negative, or neutral stance.

For example, the false information label assigning unit 12 can execute stance detection for detecting a stance in which each of the determination target information #1, #5, and #6 is affirmative, negative, or the other to the target false information using a machine learning model (not illustrated). The classification of the stance is not particularly limited, but in the present embodiment, the false information label assigning unit 12 performs detection with three stance of SUPPORT indicating an affirmative stance, DENY indicating a negative stance, and OTHERS indicating a neutral stance which is neither affirmative nor negative.

For example, the determination target information #1 is information of duplication of the target false information and data of an affirmative position that strengthens the original information. In addition, the determination target information #5 is data in a neutral position expressing impressions with reference to the target false information. In addition, the determination target information #6 is data in a negative position in which correction is performed with reference to the target false information to weaken the information. Therefore, the false information label assigning unit 12 determines the stance of the determination target information #1 as SUPPORT, determines the stance of the determination target information #5 as OTHERS, and determines the stance of the determination target information #1 as DENY.

Then, the false information label assigning unit 12 assigns 1111-0001, which is the false information ID of the false information label of the target false information, in association with the storage position and the name of the determination target information #1 of which the stance is SUPPORT, and stores the labeling data in the labeling data store 104. FIG. 23 is a diagram illustrating an example of labeling data after false information label assignment according to the third embodiment. The false information label assigning unit 12 causes labeling data 145 to be stored in the labeling data store 104. On the other hand, the false information label assigning unit 12 does not assign a false information label to the determination target information #5 and #6 of which the stance is OTHERS or DENY as indicated in the labeling data 145. In this manner, the false information label assigning unit 12 narrows down information to be assigned with a false information label among the determination target information #1, #5, and #6 determined to have high similarity by citation or the like.

The false information label assigning unit 12 notifies the description label assigning unit 13 of the information of the determination target information #1 and #5 which are similar false information and of which the stance is SUPPORT and OTHERS. Furthermore, the labeling apparatus 1 ends the labeling processing for the determination target information #6 of which the stance is determined to be DENY.

Here, in the present embodiment, the false information label assigning unit 12 performs the stance detection of the modality and the assignment of the false information label, but for example, the function of the stance detection may be separated from the false information label assigning unit 12. In the present embodiment, a portion that performs stance detection in the false information label assigning unit 12 corresponds to an example of a "stance detection unit". That is, the stance detection unit detects a stance of the content with respect to the target false information. Then, the false information label assigning unit 12 assigns the second label to the content according to the stance.

Referring back to FIG. 1, the description is continued. In the present embodiment, the description label assigning unit 13 has 0.8 as the description assignment determination threshold value. The false information label assigning unit 12 receives the notification from the false information label assigning unit 12 of the information of the determination target information #1 and #5 which are similar false information and of which the stance is SUPPORT and OTHERS. Then, the false information label assigning unit 12 determines that the cosine similarities of the modalities having the modality IDs of 3333-0003, 3333-0004, or 3333-0011 among the modalities of the determination target information #1 and #5 are equal to or greater than the description assignment determination threshold value. Then, the description label assigning unit 13 assigns the description label of the modality of the target false information corresponding to each of the modalities of which the modality ID is 3333-0003, 3333-0004, or 3333-0011. Then, the description label assigning unit 13 stores the information of the modalities of which the modality IDs are 3333-0003, 3333-0004, or 3333-0011 in the labeling data store 104. As described above, the description label assigning unit 13, which is the first label assigning unit, assigns the first label to the first unit information according to the stance.

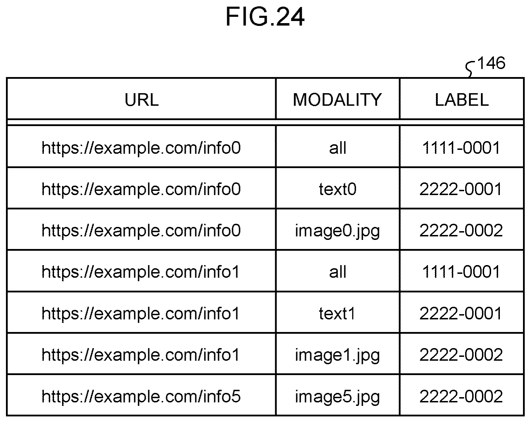

FIG. 24 is a diagram illustrating an example of the labeling data after description label assignment according to the third embodiment. The description label assigning unit 13 assigns description labels to the modalities having the modality IDs of 3333-0003 and 3333-0004, similarly to the first embodiment. Also, the description label assigning unit 13 assigns the description label having the description ID of 2222-0002 in the description label data 130 in association with the storage position and name of the modality having the modality ID of 3333-0011 in the determination target information #5. Then, the description label assigning unit 13 stores the information of the modalities of which the modality IDs are 3333-0003, 3333-0004, or 3333-0011 in the labeling data store 104. As a result, the description label assigning unit 13 causes labeling data 146 illustrated in FIG. 24 to be stored in the labeling data store 104.

In this manner, the description label assigning unit 13 also assigns the description label to the determination target information #5 in a neutral stance. For example, even if the determination target information is information in which a statement to reinforce the false information is not made, if the viewer views an image or a moving image cited from the target false information, there is a possibility that the viewer misunderstands the false information as the truth. Therefore, the description label assigning unit 13 does not assign the false information label to the determination target information #5 of which the stance is OTHERS but assigns a description label that assists understanding of the information, so that the viewer is prevented from misunderstanding and the above-described situation is prevented.

As described above, the labeling apparatus 1 according to the present embodiment narrows down the target to be labeled according to the stance of the determination target information. As a result, the labeling apparatus 1 can accurately extract the determination target information to be the target of the countermeasure. For example, as a case where a problem may occur if the stance detection is not performed, there is a case where information pointing out and criticizing that the information is false information in a form of referring to the original article, or information that merely gives an opinion in a neutral position is posted. In such a case, although the information is information for correcting the false information, since the information refers to or cites the original article, such information is easily classified as similar false information. It is desirable to avoid issuing a warning with a label assigned to such information since the cognitive load of the viewer increases, the effect of intervention and countermeasures against false information is reduced. Therefore, the labeling apparatus 1 according to the present embodiment can issue an appropriate warning to the viewer by appropriate labeling by detecting a stance with respect to the target false information. Therefore, the labeling apparatus 1 can efficiently assign a label and can provide an effective false information countermeasure.

In one aspect, the present invention can provide an effective false information countermeasure.

## Claims

1. The information processing apparatus (2) comprising:
a decomposition unit (14) configured to decompose a content existing on a network into first unit information based on a format;
a similarity classification processing unit (11) configured to calculate a similarity between false information and second unit information included in determined target false information for each piece of the first unit information; and
a first label assigning unit (12) configured to assign, to each piece of the first unit information, a first label assigned to the second unit information in which the similarity is equal to or greater than a first threshold value.

2. The information processing apparatus (2) according to claim 1, further comprising:
a second label assigning unit (13) configured to assign, to the content, a second label assigned to the target false information, when a total value of a similarity between the content and the target false information is equal to or greater than a second threshold value,
wherein the similarity classification processing unit (11) calculates the total value of the similarity, based on the similarity, and
the first label assigning unit (12) assigns the first label to the first unit information with respect to the content to which the second label is assigned.

3. The information processing apparatus (2) according to claim 2, wherein the similarity classification processing unit (11) calculates a total value of the similarity based on the similarity and a weight allocated to the first unit information.

4. The information processing apparatus (2) according to claim 1, further comprising:
a stance detection unit configured to detect a stance to the target false information of the content,
wherein the first label assigning unit (11) assigns the first label to the first unit information according to the stance.

5. The information processing apparatus (2) according to claim 2, further comprising:
a stance detection unit configured to detect a stance to the target false information of the content,
wherein the second label assigning unit (11) assigns the second label to the content according to the stance.

6. An information processing method carried out by a computer, comprising:
decomposing (S1) a content existing on a network into first unit information based on a format;
calculating (S2) a similarity between false information and second unit information included in determined target false information for each piece of the first unit information; and
assigning (S5), to each piece of the first unit information, a first label assigned to the second unit information in which the similarity is equal to or greater than a first threshold value.

7. An information processing program that causes a computer to execute a process comprising:
decomposing (S1) a content existing on a network into first unit information based on a format;
calculating (S2) a similarity between false information and second unit information included in determined target false information for each piece of the first unit information; and
assigning (S5), to each piece of the first unit information, a first label assigned to the second unit information in which the similarity is equal to or greater than a first threshold value.
